# EUROPÄISCHE PATENTSCHRIFT

(11) **EP 1 398 262 B1**
(45) Veröffentlichungstag und Bekanntmachung des Hinweises auf die Patenterteilung: **23.09.2009**
(21) Anmeldenummer: 03019144.9
(22) Anmeldetag: 25.08.2003
(51) Int. Cl.: B62K 27/10

(54) **Körperaufnahme für ein fahrbares Rahmengestell**
Device for supporting the body of a child in a movable frame
Support pour enfant destiné à un cadre mobile

(30) Priorität: 10.09.2002 DE 10242198
(43) Veröffentlichungstag der Anmeldung: 17.03.2004
(60) Teilanmeldung: 09158270.0
(73) Patentinhaber: "Zwei plus zwei" Marketing GmbH, 50933 Köln (DE)
(72) Erfinder: Britton, Daniel, Calgary, Alberta T2H (CA); Gehlen, Andreas, D-50672 Köln (DE)
(74) Vertreter: Stute, Ivo Peter

(56) Entgegenhaltungen:
- EP-A- 0 339 890
- DE-U1- 9 215 797
- GB-A- 175 742
- US-A- 5 076 599

## Beschreibung

Die Erfindung betrifft eine Körperaufnahme für ein fahrbares Rahmengestell, insbesondere zum Transport von Babys oder Kleinkindern, nach dem Oberbegriff von Anspruch 1. Eine derartige Körperaufnahme ist aus der DE 201 07 010 U1 bekannt, die allerdings nicht für die Verwendung in einem farhbaren Rahmengestell vorgesehen ist.

Der Transport von Kleinkindern und Babys in Fahrradanhängern ist nicht ohne weiteres möglich, da die Sitze der Fahrradanhänger hierfür nicht ausgelegt sind. Aufgrund des Mangels an geeigneten Lösungen für dieses Problem werden häufig für Autos konzipierte Babyschalen in Fahrradanhänger eingesetzt und darin mit Gurten befestigt. Zwar kann ein Kleinkind auf diese Weise grundsätzlich in einem Fahrradanhänger transportiert werden, allerdings besteht dabei der wesentliche Nachteil, dass die Babyschalen sehr klobig und in der Regel breiter als eine für ein Kind vorgesehene Sitzfläche sind. Dies ist insbesondere bei zweisitzigen Fahrradanhängern ein Problem, da bei Einsetzen der Babyschale in den Fahrradanhänger neben der Schale kaum noch Platz für ein zweites Kind, geschweige denn für eine zweite Babyschale verbleibt.

Die einzige im Markt erhältliche Möglichkeit zum Transport von Babys in einem Fahrradanhänger ist eine harte Babyschale aus Polystyrol des deutschen Herstellers Weber Technik Werkzeugbau GmbH, die gegenüber den vorgenannten Babyschalen auf die Breite eines Kindersitzes eines Fahrradanhängers zugeschnitten ist. Diese Schale weist eine konkav ausgebildete Liegesitzfläche auf, deren Gesäßbereich gegenüber dem Rücken- und Schulterbereich abgeflacht ist. Knapp unterhalb des Gesäßbereichs der Schale sind in ihrer Mitte eine Durchgangsöffnung sowie in ihrem Schulterbereich zu beiden Seiten der zentralen Längsachse mehrere übereinander paarweise angeordnete Durchgangsöffnungen für die Gurte eines Rückhaltesystems zum Anschnallen des Babys vorgesehen. Darüber hinaus sind im oberen und im unteren Bereich der Schale Befestigungsöffnungen vorgesehen, durch die Schlaufen zur Befestigung der Babyschale auf einem Sitz des Fahrradanhängers hindurch gezogen werden können.

Auch diese Babyschale weist wesentliche Nachteile auf. Sie ist sperrig, wodurch die Befestigung der Babyschale in einem Sitz im Fahrradanhänger erschwert wird und eine platzsparende Lagerung, beispielsweise in einem Warenlager oder einer Garage nicht möglich ist. Die Babyschale ist starr, so dass sie sich nicht an die Lage und Bewegung eines Babys oder Kleinkindes anpassen kann. Schließlich ist die Schale nicht atmungsaktiv, was insbesondere an warmen Tagen oder bei langem Sitzen unangenehm ist.

Daher liegt der vorliegenden Erfindung die Aufgabe zu Grunde, eine Alternative zur zuvor beschriebenen Babyschale zur Verfügung zu stellen, mit der ein Transport von Babys in einem Fahrradanhänger ermöglicht wird und bei der die zuvor beschriebenen Nachteile nicht bestehen.

Diese Aufgabe wird durch eine Körperaufnahme nach Anspruch 1 gelöst.

Die Grundidee der Erfindung besteht darin, die Körperaufnahme aus einem flexiblen Material zu bilden, das bei Bedarf durch ein Verspannen des Materials von außen und/oder in sich selbst in die für den Transport des Körpers benötigte Form gebracht werden kann. Ein Verspannen von außen ist so zu verstehen, dass außerhalb der Körperaufnahme am Rahmengestell gelagerte Spannelemente so angeordnet sind, dass sie die Matte auf Zug belasten. In diesem Fall kommen als Spannelemente beispielsweise längenverstellbare federelastische Gurte in Betracht. Mit Verspannen "in sich selbst" ist gemeint, dass sich die Spannelemente beim Verspannen im Material selbst abstützen. Eine solche Verspannung ist beispielsweise mit Federstangen möglich, die in Hohlnähte, die in oder an der Matte vorgesehen sind, eingeschoben und unter Spannung in Verankerungspunkte der Matte eingesetzt werden, ähnlich wie bei einem selbsttragenden Kuppelzelt.

Die erfindungsgemäße Körperaufnahme weist gegenüber der eingangs beschriebenen Babyschale verschiedene Vorteile auf. So kann die flexible Matte bei Nichtgebrauch einfach zusammengefaltet und kompakt verstaut werden, nachdem die Spannelemente gelöst worden sind. Des weiteren weist sie selbst in ihrer Transportform eine gewisse Flexibilität auf, so dass sich die Matte bis zu einem gewissen Grad an eine Körperform anpassen kann. Hierdurch wird der Liege- bzw. Sitzkomfort erhöht, genauso wie dadurch, dass die flexible Matte teilweise oder ganz aus einem atmungsaktiven Material bestehen kann. Schließlich ist auch die Befestigung der Körperaufnahme in einem fahrbaren Rahmengestell, insbesondere in einem Fahrradanhänger, zumindest dann wesentlich einfacher, wenn sie zunächst befestigt und erst danach durch Spannelemente in ihre Transportform gebracht wird.

Es sind insbesondere in Höhe des Gesäßbereichs Wandungen angeordnet, die einem seitlichen Herausrutschen des bzw. der Körper entgegenwirken. Die Wandungen wirken insbesondere mit einem Rückhaltesystem, mit dem bereits ein Herausrutschen des bzw. der transportierten Körper aus der Körperaufnahme verhindert werden kann, zusammen, indem sie die Lage des Körpers stabilisieren.

Um den Komfort der Matte zu erhöhen, sind die Wandungen bevorzugt mit einer Polsterung versehen und/oder mit einem luftdurchlässigen Gewebe ausgebildet.

Zur Stabilisierung der Seiten der Körperaufnahme sind vorzugsweise in Längsrichtung der Matte verlaufende Gurte vorgesehen, die grundsätzlich zwar in der Ebene der Stützfläche, die die Körperunterseite abstützt, angeordnet sein können, bevorzugt aber an den Oberkanten der Wandungen verlaufen. Gurte eignen sich insofern besonders gut zum Stabilisieren der Körperaufnahme, als sie stark auf Zug belastet werden können. Darüber hinaus ist es von Vorteil, wenn an den Enden der Gurte Befestigungselemente angeordnet sind, mit denen die Körperaufnahme beispielsweise in ein Rahmengestell eingehängt oder über Spannelemente darin verspannt werden kann.

Die in Längsrichtung angeordneten Gurte verlaufen vorzugsweise in schlauchartigen Hülsen, die bevorzugt aus einem geschäumten Material bestehen, so dass die Gurte abgepolstert sind. Es kann darüber hinaus von Vorteil sein, wenn die Gurte in den Hülsen befestigt, beispielsweise darin eingenäht oder eingeklebt sind. Die Hülsen können in längs zu beiden Seiten der Matte oder an den Oberkanten der Wandungen verlaufende Hohlnähte eingelassen sein.

Des weiteren ist es von Vorteil, wenn die Hülsen elastisch und insbesondere faltbar sind, damit sie zusammen mit der Matte kompakt zusammengefaltet oder gerollt werden können, ohne dass das Hülsenmaterial dabei beschädigt wird.

Auch sind die Hülsen bevorzugt in Längsrichtung gebogen und die Stützfläche in Arbeitsposition konkav vorgeformt. Eine Vorformung der Matte kann beispielsweise darin bestehen, dass die Wandungen und die Stützfläche so vernäht sind, dass sich beispielsweise ein gegenüber dem Rücken- und Schulterbereich abgewinkelter Gesäßbereich ergibt. Hierdurch wird die Montage und insbesondere das Verspannen der Körperaufnahme in die Transportform erleichtert.

In einer weiteren vorteilhaften Ausgestaltung ist die Vorderkante der Matte mit einer Polsterung versehen , die gegenüber der Stützfläche erhaben ist. Zum einen kann hiermit die Matte in Querrichtung stabilisiert werden. Zum anderen bietet die Polsterung besonderes während des Anschnallens eine Sicherung gegen ein Herausrutschen des Babys oder Kleinkindes.

Eine Stabilisierung der Matte quer zu ihrer Längsachse erfolgt über einen auf der Rückseite der Matte befestigten, quer zu ihrer Längsrichtung verlaufenden Gurt, an dessen Enden Befestigungselemente angeordnet sind. Insbesondere wenn dieser Gurt im Gesäßbereich der Stützfläche angeordnet ist, kann die Körperaufnahme hierüber so verspannt werden, dass sich ein Winkel zwischen Gesäßbereich sowie Rücken- und Schulterbereich der Stützfläche ergibt, und zwar gerade dann, wenn die Matte in ihrer Längsrichtung an ihrer Ober- und Unterseite entsprechend verspannt ist. Alternativ hierzu ist es auch möglich, an der Rückseite auf jeder Seite der Matte je einen Gurt vorzusehen, mit denen die Matte nach hinten verspannbar ist.

Um die Position der Körperaufnahme und die zur Verspannung aufzubringenden Kräfte einstellen zu können, ist es von Vorteil, wenn die Länge der Gurte an mindestens einem ihrer Enden einstellbar ist.

Zur Erleichterung der Montage kann mindestens eines der Befestigungselemente als Schnellverschluss ausgebildet sein, der mit einem entsprechenden Gegenstück, das am Rahmengestell angeordnet ist, zusammenwirkt.

Um den Sitz- bzw. Liegekomfort zu erhöhen, sind die Oberflächen der Körperaufnahme zumindest teilweise, insbesondere im Bereich von Polsterungen, mit einem Vlies versehen.

Als besonders strapazierfähig werden bevorzugt Textilgewebe für die Matte verwendet. Insbesondere bietet es sich an, die Unterseite der Matte mit einem Textilgewebe auszustatten und in bevorzugter weiterer Ausbildung zur Polsterung eine Beschichtung aus einem geschäumten Kunststoff darauf aufzubringen. Auf diese Weise können im Bereich der Stützfläche sowohl die Anforderungen an die Materialfestigkeit als auch an den Komfort erfüllt werden, insbesondere dann, wenn die Beschichtung zusätzlich atmungsaktiv ist.

Als Rückhaltesystem zur Sicherung des zu transportierenden Körpers bei einem Stoß oder Aufprall des Rahmengestells können an der Matte Sicherheitsgurte vorgesehen sein, die insbesondere in den stabilisierten Bereichen der Matte, beispielsweise in den Bereichen von Längs- oder Quergurten, befestigt sind. Sofern am Rahmengestell bereits ein Rückhaltesystem vorgesehen ist, weist die Stützfläche bevorzugt Öffnungen für die Gurte des Rückhaltesystems auf. Die Anordnung der Öffnungen kann dabei wie bei der eingangs beschriebenen Babyschale sein.

Aus dem Vorstehenden ergibt sich, dass die Körperaufnahme vorzugsweise in einem Rahmengestell einer Fahrgastzelle eines Fahrradanhängers verwendet wird.

Im Folgenden wird die Erfindung anhand zweier Figuren, in denen ein bevorzugtes Ausführungsbeispiel der Erfindung dargestellt ist, näher beschrieben. Es zeigen
- Figur 1:: Einen Fahrradanhänger mit einer eingehängten Körperaufnahme in perspektivischer Darstellung; und
- Figur 2:: einen Querschnitt der Körperaufnahme entlang der Schnittlinie II-II in Figur 1.

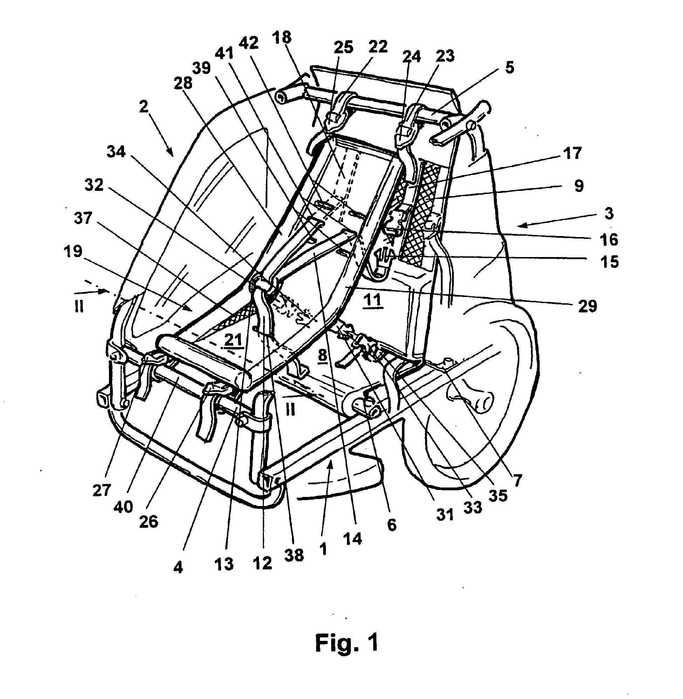

Der in Figur **1** dargestellte Fahrradanhänger weist als wesentliche Rahmenbestandteile ein Fahrgestell **1** sowie eine darauf angeordnete Fahrgastzelle mit einem die Vorder- und Oberseite der Fahrgastzelle bildenden Rahmenteil **2** und einer Fahrgastzellenrückseite **3** auf. Der Rahmenteil **2** weist an seiner Vorderseite eine oberhalb des Fahrgestells **1** angeordnete Querstrebe **4** auf, die wesentlich niedriger angeordnet ist als ein am oberen Ende der Fahrgastzellenrückseite vorgesehenes Querrohr **5.**

Am Fahrgestell **1** sind zwei hintereinander angeordnete Querträger **6, 7** vorgesehen, an denen unter anderem die Vorder- und die Hinterkante einer Sitzfläche **8** verankert ist. Zwischen dem hinteren Querträger **7** und einem an der Oberkante der Rahmenrückseite vorgesehenem Querrohr **5** ist eine Rückwand **9** eingespannt, an deren unteren Bereich eine gepolsterte Rückenlehne **11** angenäht ist. In der Mitte der Vorderkante der Sitzfläche **8** ist ein Basisgurt **12** eines Rückhaltesystems verankert, der über einen Ring **13** mit einem Schultergurt **14** zusammenwirkt, wobei beide Enden des Schultergurts **14** mit Schnappverschlüssen **15**, **16** an der Rückwand **9** befestigt werden können. Die an der Rückwand 9 angeordneten Teile der Schnappverschlüsse **16** sind an nebeneinander angeordneten Gurten **17**, **18** so befestigt, dass ihre Höhe einstellbar ist.

Zwischen der Querstrebe **4** und dem Querrohr **5** ist eine Körperaufnahme **19** mit einer eine Liegesitzfläche bildenden Matte **21** eingehängt. Die Körperaufnahme wird von zwei an ihrer Längsseite geführten Gurten **22, 23** gehalten, deren Enden als Schlaufen um die Querstrebe **4** bzw. das Querrohr **5** herumgeführt und mit Schnallen **24, 25, 26, 27** befestigt sind. Die Gurte sind in schlauchartigen Hülsen **28, 29** aus einem geschäumten Material geführt, die als Bestandteile seitlicher Wandungen der Körperaufnahme zur Sicherung gegen das Herausrutschen eines darin sitzenden Babys vorgesehen sind.

Die Körperaufnahme **19** wird über an der Rückseite zu beiden Seiten des Hüftbereichs der Matte **21** angeordnete Gurte **31, 32**, die über Verschlüsse **33, 34** mit am hinteren Querträger **7** befestigten Gurten **35** zusammenwirken, verspannt. Durch die Verspannung wird die Matte **21** im Hüftbereich abgewinkelt, so dass der Gesäßbereich gegenüber dem Rücken- und Schulterbereich flacher geneigt ist.

Zwischen den schlauchartigen Hülsen **28, 29** und der Matte **21** sind jeweils Textilnetze **37** eingesetzt, die sich in Längsrichtung zur Ober- und Unterkante der Körperaufnahme hin verjüngen, so dass die Wandungen insbesondere im Gesäßbereich erhöht sind.

In der Matte **21** sind Öffnungen zur Durchführung der Sicherheitsgurte des Rückhaltesystems vorgesehen, und zwar eine erste Öffnung **38** etwas unterhalb der Mitte des Gesäßbereichs zum Durchführen des Basisgurtes **12** einschließlich des daran befestigten Rings **13,** und übereinander angeordnete Öffnungspaare **39, 41, 42** zu beiden Seiten der zentralen Längsachse im Schulterbereich der Matte **21** zum Durchführen des Schultergurtes **14**.

Die Matte **21** schließt in ihrem unteren Bereich mit einer quer verlaufenden, gepolsterten Wulst **40** ab, mit der ein Baby oder Kleinkind insbesondere in der Zeit vor und während des Anschnallens gegen ein Herausrutschen aus der Körperaufnahme **19** gesichert ist.

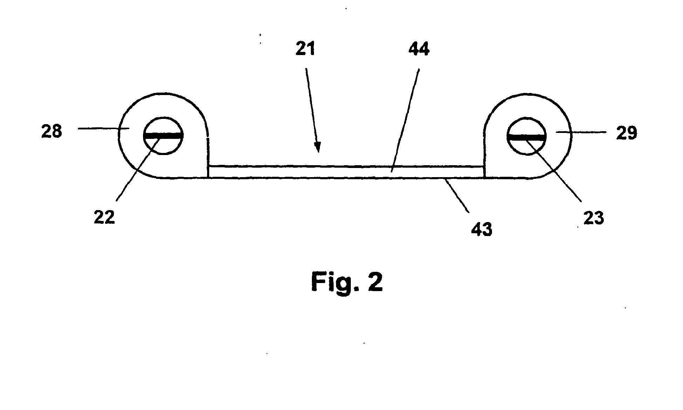

Insbesondere in dem in Figur 2 dargestellten Querschnitt der Körperaufnahme ist zu erkennen, dass die Gurte **22, 23** in den schlauchartigen Hülsen **28, 29** geführt sind. Die Unterseite der Matte **21** besteht aus einem Textilmaterial **41**, in das die schlauchartigen Hülsen **28, 29** zu beiden Seiten der Matte **21** eingenäht sind. Das Textilmaterial **43** ist auf seiner Oberseite zwischen den schlauchartigen Hülsen mit einer aufgeschäumten, atmungsaktiven Beschichtung **44** gepolstert.

## Patentansprüche

1. Körperaufnahme zum Transport eines Babys in einem fahrbaren Rahmengestell, die mit mindestens einem Befestigungselement im Rahmengestell befestigt werden kann, beinhaltend eine flexible Matte (21), seitlich angeordnete Spannelemente (22, 23) zum Verspannen der flexiblen Matte (21) in Längsrichtung, , weiters beinhaltend seitlich an der Matte (21), insbesondere in Höhe des Gesäßbereichs angeordnete Wandungen, die einem seitlichen Herausrutschen des Babys entgegenwirken, **gekennzeichnet durch** einen auf der Rückseite der Matte (21) befestigten, quer zu ihrer Längsrichtung verlaufenden Gurt, an dessen Enden Befestigungselemente angeordnet sind, zur Stabilisierung der Matte quer zu ihrer Längsrichtung, oder **durch** je einen an der Rückseite der Matte (21) auf jeder Seite der Matte (21) vorgesehenen Gurt, mit denen die Matte (21) nach hinten verspannbar ist.

2. Körperaufnahme nach Anspruch 1, **dadurch gekennzeichnet, dass** die Wandungen zumindest teilweise mit einer Polsterung versehen sind.

3. Körperaufnahme nach Anspruch 1 oder 2, **dadurch gekennzeichnet, dass** die Wandungen mit einem luftdurchlässigen Gewebe (37) ausgebildet sind.

4. Körperaufnahme nach einem der Ansprüche 1 bis 3, **gekennzeichnet durch** seitliche, in Längsrichtung der Matte (21) verlaufende Spannelemente (22, 23).

5. Körperaufnahme nach einem der Ansprüche 1 bis 4, **gekennzeichnet durch** Gurte als seitliche, in Längsrichtung der Matte (21) verlaufende Spannelemente (22, 23).

6. Körperaufnahme nach einem der Ansprüche 1-3, **dadurch gekennzeichnet, dass** Gurte (22, 23) an den Oberkanten der Wandungen verlaufen.

7. Körperaufnahme nach Anspruch 5 oder 6, **dadurch gekennzeichnet, dass** an den Enden der Gurte (22, 23) Befestigungselemente (24, 25, 26, 27) angeordnet sind.

8. Körperaufnahme nach Anspruch 6 oder den auf Anspruch 6 rückbezogenen Anspruch 7, **dadurch gekennzeichnet, dass** die Gurte (22, 23) an den Oberkanten der Wandungen innerhalb von schlauchartigen Hülsen (28, 29) verlaufen.

9. Körperaufnahme nach Anspruch 8, **dadurch gekennzeichnet, dass** die Hülsen (28, 29) aus einem geschäumten Material bestehen.

10. Körperaufnahme nach Anspruch 8 oder 9, **dadurch gekennzeichnet, dass** die Gurte (22,23) in die Hülsen (28, 29) eingeklebt sind.

11. Körperaufnahme nach einem der Ansprüche 8 bis 10, **dadurch gekennzeichnet, dass** die Hülsen (28, 29) elastisch und insbesondere faltbar sind.

12. Körperaufnahme nach einem der Ansprüche 8 bis 11, **dadurch gekennzeichnet, dass** die Hülsen (28, 29) in Längsrichtung gebogen sind und die Matte in Arbeitsposition konkav vorgeformt ist.

13. Körperaufnahme nach einem der Ansprüche 1 bis 12, **dadurch gekennzeichnet, dass** die Vorderkante der Matte (21) mit einer Polsterung versehen ist, die gegenüber der Matte erhaben ist.

14. Körperaufnahme nach einem der Ansprüche 5 bis 13, **dadurch gekennzeichnet, dass** die Länge der Gurte (22, 23, 31, 32) an mindestens einem ihrer Enden einstellbar ist.

15. Körperaufnahme nach einem der Ansprüche 1 bis 14, **dadurch gekennzeichnet, dass** mindestens eines der Befestigungselemente (24, 25, 26, 27, 33, 34) als Schnellverschluss (33) ausgebildet ist, der mit einem entsprechenden Gegenstück (34), das am Rahmengestell angeordnet ist, zusammenwirkt.

16. Körperaufnahme nach einem der Ansprüche 1 bis 15, **dadurch gekennzeichnet, dass** ihre Oberflächen zumindest teilweise, insbesondere im Bereich von Polsterungen, mit einem Vlies versehen sind.

17. Körperaufnahme nach einem der Ansprüche 1 bis 16, **dadurch gekennzeichnet, dass** die Matte (21) mindestens teilweise aus einem Textilgewebe (43) besteht.

18. Körperaufnahme nach Anspruch 17, **dadurch gekennzeichnet, dass** das Textilgewebe (43) die Unterseite der Matte bildet.

19. Körperaufnahme nach Anspruch 18, **gekennzeichnet durch** eine Beschichtung aus einem geschäumten Kunststoff (44) auf der Oberseite des Textilgewebes (43).

20. Körperaufnahme nach Anspruch 19, **dadurch gekennzeichnet, dass** die Beschichtung (44) atmungsaktiv ist.

21. Körperaufnahme nach einem der auf Ansprüche 5 oder 8 rückbezogenen Ansprüche 17 bis 20, **dadurch gekennzeichnet, dass** die längs verlaufenden Gurte (22, 23) bzw. Hülsen (28, 29) in das Textilgewebe (43) eingenäht sind.

22. Körperaufnahme nach einem der Ansprüche 1 bis 21, **gekennzeichnet durch** Mittel zum Sichern des bzw. der Körper.

23. Körperaufnahme nach Anspruch 22, **gekennzeichnet durch** Öffnungen (38, 39, 41, 42) in der Matte (21) zum Durchführen von am Rahmengestell oder an der Rückseite der Matte (21) befestigten Sicherheitsgurten (12, 14). .

24. Körperaufnahme nach Anspruch 22 oder 23, **gekennzeichnet durch** eine zentrale Öffnung (38) am unteren Ende des Gesäßbereichs für eine zwischen den Beinen des Körpers hindurchzuführenden Sicherheitsgurt (12).

25. Körperaufnahme nach einem der Ansprüche 22 bis 24, **gekennzeichnet durch** mindestens ein Öffnungspaar (39, 41, 42), das ein Durchführen von Schultergurten (14) ermöglicht.

26. Körperaufnahme nach Anspruch 25, **gekennzeichnet durch** mehrere, übereinander angeordnete Öffnungspaare (39, 41, 42).

27. Fahrbares Rahmengestell mit einer Körperaufnahme nach einem der Ansprüche 1-26.

## Claims

1. Body holder for transporting a baby in a movable frame, which body holder can be fastened in the frame with at least one fastening element and comprises a flexible mat (21), laterally arranged tensioning elements (22, 23) for tensioning the flexible mat (21) in the longitudinal direction, and furthermore comprising walls which are arranged laterally on the mat (21), in particular level with the posterior area and which keep the baby from slipping out sideways, **characterized by** a strap which is fastened on the rear side of the mat (21), runs transversely with respect to the longitudinal direction thereof and at the ends of which fastening elements are arranged in order to stabilize the mat transversely with respect to its longitudinal direction, or by a respective strap which is provided on the rear side of the mat (21) on each side of the same, with which straps the mat (21) can be braced to the rear.

2. Body holder according to Claim 1, **characterized in that** the walls are at least partially provided with padding.

3. Body holder according to Claim 1 or 2, **characterized in that** the walls are formed with an air-permeable fabric (37).

4. Body holder according to one of Claims 1 to 3, **characterized by** lateral tensioning elements (22, 23) running in the longitudinal direction of the mat (21).

5. Body holder according to one of Claims 1 to 4, **characterized by** straps as lateral tensioning elements (22, 23) running in the longitudinal direction of the mat (21).

6. Body holder according to one of Claims 1 to 3, **characterized in that** straps (22, 23) run along the upper edges of the walls.

7. Body holder according to Claim 5 or 6, **characterized in that** fastening elements (24, 25, 26, 27) are arranged at the ends of the straps (22, 23).

8. Body holder according to Claim 6 or claim 7 which refers back to Claim 6, **characterized in that** the straps (22, 23) run along the upper edges of the walls within tubular sleeves (28, 29).

9. Body holder according to Claim 8, **characterized in that** the sleeves (28, 29) are composed of a foamed material.

10. Body holder according to Claim 8 or 9, **characterized in that** the straps (22, 23) are adhesively bonded into the sleeves (28, 29).

11. Body holder according to one of Claims 8 to 10, **characterized in that** the sleeves (28, 29) are elastic and in particular can be folded.

12. Body holder according to one of Claims 8 to 11, **characterized in that** the sleeves (28, 29) are curved in the longitudinal direction, and the mat is preshaped concavely in a working position.

13. Body holder according to one of Claims 1 to 12, **characterized in that** the front edge of the mat (21) is provided with padding which is raised in relation to the mat.

14. Body holder according to one of Claims 5 to 13, **characterized in that** the length of the straps (22, 23, 31, 32) can be adjusted at at least one of the ends thereof.

15. Body holder according to one of Claims 1 to 14, **characterized in that** at least one of the fastening elements (24, 25, 26, 27, 33, 34) is designed as a snap buckle (33) which interacts with a corresponding counterpart (34) arranged on the frame.

16. Body holder according to one of Claims 1 to 15, **characterized in that** the surfaces thereof are at least partially provided with a fleece, in particular in the region of the paddings.

17. Body holder according to one of Claims 1 to 16, **characterized in that** the mat (21) is at least partially composed of a textile fabric (43).

18. Body holder according to Claim 17, **characterized in that** the textile fabric (43) forms the underside of the mat.

19. Body holder according to Claim 18, **characterized by** a coating of foamed plastic (44) on the upper side of the textile fabric (43).

20. Body holder according to Claim 19, **characterized in that** the coating (44) is breathable.

21. Body holder according to one of Claims 17 to 20, which refer back to Claim 5 or 8, **characterized in that** the straps (22, 23) respectively the sleeves (28, 29) running longitudinally are sewn into the textile fabric (43).

22. Body holder according to one of Claims 1 to 21, **characterized by** means for securing the body or the bodies.

23. Body holder according to Claim 22, **characterized by** openings (38, 39, 41, 42) in the mat (21) for the passage of safety belts (12, 14) which are fastened to the frame or to the rear side of the mat (21).

24. Body holder according to Claim 22 or 23, **characterized by** a central opening (38) at the lower end of the posterior area for a safety belt (12) which is to be passed through between the legs of the body.

25. Body holder according to one of Claims 22 to 24, **characterized by** at least one pair of openings (39, 41, 42) permitting the passage of shoulder belts (14).

26. Body holder according to Claim 25, **characterized by** a plurality of pairs of openings (39, 41, 42) arranged one above another.

27. Movable frame with a body holder according to one of Claims 1-26.

## Revendications

1. Réceptacle corporel pour le transport d'un bébé dans un cadre-châssis mobile, qui peut être fixé dans ledit cadre-châssis à l'aide d'au moins un élément de fixation, comprenant une natte flexible (21), des éléments de serrage (22, 23) disposés latéralement et pour bloquer ladite natte flexible (21) dans la direction longitudinale, et comprenant en outre des parois disposées latéralement sur la natte (21), notamment à la hauteur de la zone du siège, et contrecarrant un ripage latéral du bébé, **caractérisé par** une sangle fixée sur la face postérieure de la natte (21), s'étendant transversalement par rapport à la direction longitudinale de cette dernière, et aux extrémités de laquelle des éléments de fixation sont disposés en vue de stabiliser ladite natte transversalement par rapport à sa direction longitudinale ; ou par une sangle respective prévue à la face postérieure de la natte (21), de chaque côté de ladite natte (21), et par laquelle ladite natte (21) peut être bloquée vers l'arrière.

2. Réceptacle corporel selon la revendication 1, **caractérisé par le fait que** les parois sont pourvues au moins en partie d'un rembourrage.

3. Réceptacle corporel selon la revendication 1 ou 2, **caractérisé par le fait que** les parois sont munies d'un tissu (37) perméable à l'air.

4. Réceptacle corporel selon l'une des revendications 1 à 3, **caractérisé par** des éléments latéraux de serrage (22, 23) s'étendant dans la direction longitudinale de la natte (21).

5. Réceptacle corporel selon l'une des revendications 1 à 4, **caractérisé par** des sangles matérialisant des éléments latéraux de serrage (22, 23) s'étendant dans la direction longitudinale de la natte (21).

6. Réceptacle corporel selon l'une des revendications 1-3, **caractérisé par le fait que** des sangles (22, 23) s'étendent sur les bords supérieurs des parois.

7. Réceptacle corporel selon la revendication 5 ou 6, **caractérisé par le fait que** des éléments de fixation (24, 25, 26, 27) sont disposés aux extrémités des sangles (22, 23).

8. Réceptacle corporel selon la revendication 6 ou la revendication 7 rattachée à ladite revendication 6, **caractérisé par le fait que** les sangles (22, 23) s'étendent sur les bords supérieurs des parois, à l'intérieur de fourreaux (28, 29) du type tuyaux souples.

9. Réceptacle corporel selon la revendication 8, **caractérisé par le fait que** les fourreaux (28, 29) consistent en un matériau venu de moussage ou expansé.

10. Réceptacle corporel selon la revendication 8 ou 9, **caractérisé par le fait que** les sangles (22, 23) sont intégrées par collage dans les fourreaux (28, 29).

11. Réceptacle corporel selon l'une des revendications 8 à 10, **caractérisé par le fait que** les fourreaux (28, 29) sont élastiques, et notamment pliables.

12. Réceptacle corporel selon l'une des revendications 8 à 11, **caractérisé par le fait que** les fourreaux (28, 29) sont cintrés dans la direction longitudinale, et que la natte est préformée de manière concave en position de fonctionnement.

13. Réceptacle corporel selon l'une des revendications 1 à 12, **caractérisé par le fait que** le bord antérieur de la natte (21) est pourvu d'un rembourrage rehaussé vis-à-vis de ladite natte.

14. Réceptacle corporel selon l'une des revendications 5 à 13, **caractérisé par le fait que** la longueur des sangles (22, 23, 31, 32) est réglable au niveau au moins de l'une de leurs extrémités.

15. Réceptacle corporel selon l'une des revendications 1 à 14, **caractérisé par le fait qu'**au moins l'un des éléments de fixation (24, 25, 26, 27, 33, 34) est réalisé sous la forme d'une fermeture rapide (33) coopérant avec une pièce complémentaire correspondante (34), située sur le cadre-châssis.

16. Réceptacle corporel selon l'une des revendications 1 à 15, **caractérisé par le fait que** ses surfaces sont pourvues d'un non-tissé, au moins en partie et notamment dans la région de rembourrages.

17. Réceptacle corporel selon l'une des revendications 1 à 16, **caractérisé par le fait que** la natte (21) est constituée au moins partiellement d'un textile (43).

18. Réceptacle corporel selon la revendication 17, **caractérisé par le fait que** le textile (43) matérialise la face inférieure de la natte.

19. Réceptacle corporel selon la revendication 18, **caractérisé par** un revêtement (44) en mousse de matière plastique sur la face supérieure du textile (43).

20. Réceptacle corporel selon la revendication 19, **caractérisé par le fait que** le revêtement (44) est doté d'un pouvoir respirant.

21. Réceptacle corporel selon l'une des revendications 17 à 20 rattachées aux revendications 5 ou 8, **caractérisé par le fait que** les sangles (22, 23) ou les fourreaux (28, 29), s'étendant respectivement dans le sens longitudinal, sont intégré(e)s par couture ou cousu(e)s dans le textile (43).

22. Réceptacle corporel selon l'une des revendications 1 à 21, **caractérisé par** des moyens d'arrêt du ou des corps.

23. Réceptacle corporel selon la revendication 22, **caractérisé par** des orifices (38, 39, 41, 42) pratiqués dans la natte (21), en vue du passage de sangles de sûreté (12, 14) fixées au cadre-châssis ou à la face postérieure de ladite natte (21).

24. Réceptacle corporel selon la revendication 22 ou 23, **caractérisé par** un orifice central (38) pratiqué à l'extrémité inférieure de la zone du siège et destiné à une sangle de sûreté (12) pour passer, d'un trait, entre les jambes du corps.

25. Réceptacle corporel selon l'une des revendications 22 à 24, **caractérisé par** au moins une paire d'orifices (39, 41, 42) autorisant un passage de sangles scapulaires (14).

26. Réceptacle corporel selon la revendication 25, **caractérisé par** plusieurs paires d'orifices (39, 41, 42) agencées les uns au-dessus des autres.

27. Cadre-châssis mobile équipé d'un réceptacle corporel selon l'une des revendications 1-26.
